# EUROPEAN PATENT SPECIFICATION

(11) **EP 3 263 879 B1**
(45) Date of publication and mention of the grant of the patent: **18.12.2019**
(21) Application number: 15891807.8
(22) Date of filing: 12.05.2015
(51) Int. Cl.: F02F 1/42, F02B 23/08, F02B 31/00, F02F 3/26, F02F 1/24

(54) **TWO-VALVE ENGINE**
ZWEIVENTILMOTOR
MOTEUR À DEUX SOUPAPES

(43) Date of publication of application: 03.01.2018
(73) Proprietor: Yamaha Hatsudoki Kabushiki Kaisha, Iwata-shi, Shizuoka 438-8501 (JP)
(72) Inventor: TANOKURA, Hayato, Iwata-shi Shizuoka 438-8501 (JP); SUZUKI, Minoru, Iwata-shi Shizuoka 438-8501 (JP); ITO, Masaki, Iwata-shi Shizuoka 438-8501 (JP); IWAKI, Yohei, Iwata-shi Shizuoka 438-8501 (JP)
(74) Representative: Zimmermann, Tankred Klaus
(86) International application number: PCT/JP2015/063564
(87) International publication number: WO 2016/181482

(56) References cited:
- EP-A2- 2 149 696
- JP-A- H1 150 907
- JP-A- H02 149 722
- JP-A- H08 144 767
- JP-A- 2004 278 634
- JP-A- 2004 278 634
- JP-A- 2007 146 815
- JP-A- 2007 146 815
- JP-A- 2015 001 154
- JP-A- 2015 063 926
- JP-U- S58 154 823
- US-A- 4 344 408
- US-A- 4 367 707
- US-A- 4 494 489
- US-A- 5 277 160
- US-A1- 2014 238 367

## Description

### Technical Field

The present teaching relates to a two-valve engine.

### Background Art

In an engine, there is a constant need for an improvement in fuel efficiency. One method for improving fuel efficiency is to increase the rapidness of combustion in an expansion stroke of the engine.

Non-patent Literature 1 (NPTL 1) shows an engine having its fuel efficiency improved by enhancement of a tumble flow which is a vortex of a mixed gas in a combustion chamber. The engine of Non-patent Literature 1 is a four-stroke engine for a compact two-wheel vehicle, which is a two-valve engine.

In the two-valve engine shown in Non-patent Literature 1, the mixed gas is rapidly combusted because the mixed gas has a strong flow due to the enhancement of the tumble flow. That is, a main combustion duration in the expansion stroke, which means a crank angle range in which a predetermined large part of fuel in the combustion chamber is combusted, is shortened. The rapid combustion in the expansion stroke increases the pressure rise rate in the expansion stroke. This makes pressure-volume characteristics close to ideal, and increases the working efficiency. Thus, the fuel efficiency is improved.

EP 2149696 A2 discloses a two-valve engine in accordance with the preamble of independent claim 1.

### Citation List

### Non-patent Literature

NPTL 1: Honda R&D Technical Review, Vol. 16, No. 2. Oct. 2004

### Summary of Invention

### Technical Problem

As the pressure rise rate in the combustion chamber increases due to the rapid combustion of the mixed gas, a combustion shock increases. The combustion shock leads to a combustion noise of the engine. The shock propagates through a piston, a crankshaft and a bearing.

In this respect, the engine of Non-patent Literature 1 employs a roller bearing as a journal bearing for supporting the crankshaft. The engine of Non-patent Literature **1** suppresses propagation of a combustion noise by improving, with the roller bearing, support stiffness of a crankshaft. In some cases, however, adoption of a roller bearing as a journal bearing is difficult. It is therefore desirable to enable suppression of a combustion noise occurrence while improving fuel efficiency due to characteristics of the engine itself, irrespective of the journal bearing type. A two-valve engine having such a configuration is able to suppress the occurrence of a combustion noise while improving fuel efficiency even when a bearing (e.g., a ball bearing) other than a roller bearing is adopted as a journal bearing. Moreover, by adopting a roller bearing, such a two-valve engine can achieve improvement of fuel efficiency at a higher level and suppression of a combustion noise occurrence.

An object of the present teaching is to provide a two-valve engine configured to suppress a combustion noise occurrence while improving fuel efficiency.

### Solution to Problem

To solve the problems described above, the present teaching adopts the following configurations.
(1) A two-valve engine according to independent claim 1.

In the two-valve engine of (1), the piston part is housed in the cylinder bore of the cylinder body part. The cylinder head part has one intake port communicating with the intake passage and one exhaust port communicating with the exhaust passage. The intake port is opened and closed by the intake valve, and the exhaust port is opened and closed by the exhaust valve. The cylinder part cooperates with the piston part to define a combustion chamber. The ignition device is not arranged on the straight line passing through the center of the intake port and the center of the exhaust port. The ignition device is arranged in one of the two regions that are defined by dividing the combustion chamber by the above-mentioned straight line.

The fuel injector part injects the fuel to the intake passage. When the intake valve opens the intake port, a mixed gas containing the fuel flows through the intake passage and then through the intake port into the combustion chamber along with movement of the piston part. The mixed gas in the combustion chamber is ignited by the ignition device, to be combusted. When the mixed gas having passed through the intake passage enters the combustion chamber from the intake port, a vortex of the mixed gas occurs in the combustion chamber.

The intake passage is arranged such that the region where the ignition device is not arranged is located on the straight line which is an extension of the center line of the intake passage from the center of the intake port, when viewed in the direction of the central axis line of the cylinder bore. Thus, the vortex of the mixed gas in the combustion chamber has a swirling flow component flowing around the central axis line and a tumble flow component flowing around a line perpendicular to the central axis line. That is, a combined flow of a swirling flow and a tumble flow occurs in the combustion chamber.

When viewed in the direction of the central axis line, a main tumble flow (simply referred to as a tumble flow) of the mixed gas having entered the combustion chamber from the intake port flows along the straight line that is an extension of the center line of the intake passage from the intake port. Therefore, the tumble flow orientation is not parallel to, but oblique from the direction of the intake port toward the exhaust port. The tumble flow is oriented so as to flow from the center of the intake port and pass through one of the two regions where the ignition device is not arranged. Since the tumble flow circles around the line perpendicular to the central axis line, the above-described oblique tumble flow orientation is true not only in the vicinity of the intake port but, also, in the vicinity of the ignition device. Therefore, the tumble flow orientation in the vicinity of the ignition device contains a component oriented from the intake port toward the exhaust port and a component oriented from the ignition device toward the region where the ignition device is not arranged.

On the other hand, the swirling flow of the mixed gas circles around the central axis line. The swirling flow circles around the central axis line in such a direction as to pass through the intake port, the exhaust port, and the ignition device in this order. The swirling flow in the vicinity of the ignition device is oriented from the exhaust port toward the intake port. The combustion chamber has the non-squish region that is provided in at least a part of the peripheral region of the combustion chamber with respect to the radial direction of the cylinder bore. The non-squish region is a region where, of the cylinder head part and the piston part, at least the cylinder head part is not provided with a raised portion for producing the squish effect. The squish effect is an effect of generating turbulence and/or vortex of a mixed gas flow in the combustion chamber as a result of the piston part moving up to push out part of the mixed gas existing between the cylinder head part and the top surface of the piston part. The intake passage is arranged such that the non-squish region is located on the straight line which is an extension of the center line of the intake passage from the center of the intake port, when viewed in the direction of the central axis line. Since a raised portion for producing the squish effect is not located on the straight line which is an extension of the center line of the intake passage, the swirling flow of the mixed gas is easily maintained without hindrance thereto.

In the combustion chamber, a combined flow of the tumble flow and the swirling flow occurs, as described above. Of the tumble flow in the vicinity of the ignition device, a component oriented from the intake port toward the exhaust port is diminished by the swirling flow oriented in the opposite direction. Consequently, the mixed gas in the vicinity of the ignition device flows from one of the two regions where the ignition device is arranged toward the other of the two regions where the ignition device is not arranged.

Flame caused in the combustion chamber upon ignition by the ignition device tends to propagate along the mixed gas flow itself. In the two-valve engine of (1), a component of the tumble flow oriented from the intake port toward the exhaust port is diminished by the swirling flow in the vicinity of the ignition device of the combustion chamber. This suppresses rapid propagation of the flame caused by the ignition toward the exhaust port at an initial stage of combustion. Thus, a rapid pressure rise at the initial stage of combustion is suppressed. Therefore, occurrence of a combustion noise is suppressed. Accordingly, a combustion noise is suppressed even when, for example, a ball bearing with a low support stiffness is adopted as the rolling bearing that supports the crankshaft.

Moreover, in the two-valve engine of (1), the mixed gas in the vicinity of the ignition device flows from the region where the ignition device is arranged toward the region where the ignition device is not arranged, which easily allows flame produced by the ignition device to quickly spread in the combustion chamber. Thus, the time required for the flame to spread over a main region of the combustion chamber is shortened. In other words, a main combustion duration in an expansion stroke is shortened.

As described above, the two-valve engine of (1) suppresses rapid propagation of flame toward the exhaust port in the initial stage of combustion, but, nevertheless, the main combustion duration in the expansion stroke is shortened. Thus, the fuel efficiency of the two-valve engine is improved. Accordingly, the two-valve engine of the present teaching is able to suppress a combustion noise occurrence while improving the fuel efficiency.
(2) The two-valve engine of (1), in which
   the intake passage is arranged so as to form a curving arc on an upstream side of the intake port when viewed in the direction of the central axis line of the cylinder bore, and
   the ignition device is arranged outside the curving arc when viewed in the direction of the central axis line of the cylinder bore.
   The configuration of (2), in which the intake passage forms a curving arc on the upstream side of the intake port while the ignition device is arranged outside of the arc, produces a large swirling flow of the mixed gas having passed through the intake passage. It is therefore easy to maintain the swirling flow of the mixed gas in the combustion chamber. Accordingly, further suppression of a combustion noise occurrence can be obtained with further improvement in the fuel efficiency.
(3) The two-valve engine of (1) or (2), in which
   the piston part has, on a top surface of the piston part, a concave portion that is recessed from a surrounding thereof, and
   the concave portion is provided such that the area over which the concave portion overlaps the region where the ignition device is arranged is larger than the area over which the concave portion overlaps the region where the ignition device is not arranged, when viewed in the direction of the central axis line of the cylinder bore.
   In the configuration of (3) having the concave portion provided in the top surface of the piston part, a wide space for forming the combustion chamber is ensured around the ignition device even when the piston part moves to the top dead center. Since the area over which the concave portion overlaps the region where the ignition device is arranged is larger than the area over which the concave portion overlaps the region where the ignition device is not arranged when viewed in the direction of the central axis line, the wide space for forming the combustion chamber is ensured around the ignition device. This is why the swirling flow of the mixed gas around the ignition device is likely to be maintained even when the piston part moves to the top dead center. Accordingly, further suppression of a combustion noise occurrence can be obtained with further improvement in the fuel efficiency.
(4) The two-valve engine of (3), in which
   the concave portion is in the shape of a spherical surface.
   In the configuration of (4) having the concave portion in the shape of a spherical surface, a bottom portion of the combustion chamber extends in the shape of a spherical surface. It is therefore further easy to maintain the swirling flow of the mixed gas in the combustion chamber. Accordingly, further suppression of a combustion noise occurrence can be obtained with further improvement in the fuel efficiency.
(5) The two-valve engine of any one of (1) to (4), in which
   the piston part has, on a top surface thereof, a convex portion that is arranged in a region opposite to the ignition device relative to a straight line passing through the center of the intake port and the center of the exhaust port, when viewed in the direction of the central axis line of the cylinder bore.
   The configuration of (5) retards flame propagation because a space of the combustion chamber is narrowed, the space corresponding to the region where the convex portion is arranged. The retard of flame propagation occurs in the region opposite to the ignition device when viewed in the direction of the central axis line, and this region is involved in combustion that occurs after completion of combustion in the main combustion duration. In the region opposite to the ignition device, the mixed gas is likely to be left uncombusted. In the configuration of (5), however, the retard of flame propagation keeps the mixed gas at a high temperature for a long period of time, which makes it easy to obtain sufficient combustion of the mixed gas. Accordingly, discharge of uncombusted mixed gas from the two-valve engine can be reduced with further suppression of a combustion noise occurrence and further improvement of the fuel efficiency.
(6) The two-valve engine of any one of (1) to (5), in which
   in the non-squish region, a spacing distance between the cylinder head part and the piston part with respect to the central axis line direction of the cylinder bore continuously increases from outside to inside with respect to the radial direction of the cylinder bore.
   The configuration of (6), in which the spacing distance between the cylinder head part and the piston part with respect to the central axis line direction of the cylinder bore continuously increases, provides less hindrance to the swirling flow of the mixed gas in the combustion chamber. It is therefore easy to maintain the swirling flow of the mixed gas in the combustion chamber. Accordingly, further suppression of a combustion noise occurrence can be obtained with further improvement of fuel efficiency.
(7) The two-valve engine of any one of (1) to (6), in which
   the non-squish region is a region where a raised portion for producing a squish effect is provided neither in the cylinder head part nor in the piston part.
   The configuration of (7), in which a raised portion for producing the squish effect is provided neither in the cylinder head part nor in the piston part, provides less of a hindrance to the swirling flow of the mixed gas in the combustion chamber. It is therefore easy to maintain the swirling flow of the mixed gas in the combustion chamber. Accordingly, further suppression of a combustion noise occurrence can be obtained with further improvement in the fuel efficiency.
(8) The two-valve engine of any one of (1) to (7), in which
   the intake passage is arranged such that a straight line, that is an extension of a center line of the intake passage from the center of the intake port, passes through the region where the ignition device is not arranged and extends to the non-squish region without overlapping the exhaust port, when viewed in the direction of the central axis line.
   The configuration of (8), in which the straight line that is an extension of the center line of the intake passage from the center of the intake port passes through the region where the ignition device is not arranged and extends without overlapping the exhaust port when viewed in the direction of the central axis line, promotes the swirling flow of the mixed gas in the combustion chamber. Accordingly, further occurrence of a combustion noise occurrence can be obtained with further improvement of fuel efficiency.
(9) The two-valve engine of any one of (1) to (8), in which
   the non-squish region of the combustion chamber is provided in a portion of the peripheral region of the combustion chamber, the portion corresponding at least to the entire region where the ignition device is not arranged.
   In the configuration of (9), the mixed gas having entered the combustion chamber flows from the intake port toward the region where the ignition device is not arranged. Since the non-squish region is provided at least in the region where the ignition device is not arranged, the flow of the mixed gas having entered the combustion chamber from the intake port is less likely to be hindered. Accordingly, further suppression of occurrence of a combustion noise can be obtained with further improvement in the fuel efficiency.
(10) The two-valve engine of any one of (1) to (9), in which
   in the non-squish region, substantially no step is provided in a region where an inside upper surface of the cylinder head part and an inner circumferential surface of the cylinder body part are adjacent to and continuous with each other.

The configuration of (10), in which substantially no step is provided in the region where the inside upper surface of the cylinder head part and the inner circumferential surface of the cylinder body part are adjacent to and continuous with each other, provides less hindrance to the flow of the mixed gas having entered the combustion chamber from the intake port. Accordingly, further suppression of occurrence of a combustion noise can be obtained with further improvement in the fuel efficiency.

### Advantageous Effects of Invention

The present teaching can suppress occurrence of a combustion noise with improvement in fuel efficiency.

### Brief Description of Drawings

[FIG. 1] A longitudinal cross-sectional view showing an outline configuration of a two-valve engine according to an embodiment of the present teaching.
[FIG. 2] A longitudinal cross-sectional view from another angle, showing an outline configuration of the two-valve engine according to the embodiment of the present teaching.
[FIG. 3] A cross-sectional view showing, on an enlarged scale, a combustion chamber and therearound of the engine shown in FIG. 1.
[FIG. 4] A cross-sectional view showing, on an enlarged scale, the combustion chamber and therearound of the engine shown in FIG. 2.
[FIG. 5] FIG. 5A is a cross-sectional view showing an engine according to a first reference example in which a raised portion is provided for producing a squish effect; and FIG. 5B is a cross-sectional view showing an engine according to a second reference example in which another raised portion is provided for producing a squish effect.
[FIG. 6] A perspective view showing an interior structure of a cylinder head part shown in FIGs. 1 and 2, as viewed in the direction of the central axis line of a cylinder bore.
[FIG. 7] A diagram showing a top surface of a piston part, as viewed in the direction of the central axis line of the cylinder bore.
[FIG. 8] A diagram showing how principal elements are arranged and a mixed gas flows in the combustion chamber of the engine.
[FIG. 9] A schematic diagram showing how a mixed gas flows in an engine configured to generate substantially no swirling flow, which is a comparative example of the embodiment.
[FIG. 10] A graph for explaining the state of combustion of a mixed gas in the engine.

### Description of Embodiments

Described below are discussions that the present inventors have conducted about fuel efficiency and combustion noise of a two-valve engine.

To improve fuel efficiency of a two-valve engine, making fuel combustion rapid is effective. Making the combustion rapid, however, increases the pressure rise rate in the combustion chamber, so that a shock increases. As a result, the combustion noise increases.

That is, there is a trade-off between improving fuel efficiency by causing rapid combustion and reducing a combustion noise. For example, as a result of causing rapid combustion by a tumble flow in the combustion chamber for the purpose of improving the fuel efficiency, the pressure rise rate increases so that the combustion noise increases. To suppress the combustion noise, conventionally, a symptomatic approach is taken such as adopting a bearing having a high support stiffness as a bearing to suppress shock propagation as mentioned above.

Based on such a conventional design concept, the present inventors have conducted intensive studies for achieving both improvement of fuel efficiency and reduction in the combustion noise, and have found the following.

Both the fuel efficiency and the combustion noise are influenced not only by the entire length of a main combustion duration but also by the degree of progress of combustion over time.

For example, a shock, which is influential to the combustion noise, is largely attributed to the pressure rise rate at an initial stage of combustion. Therefore, enabling the increase rate of the amount of combusted mixed gas to be limited at the initial stage of combustion and the increase rate of the amount of combusted mixed gas to be raised at a late stage of combustion makes it possible to limit the pressure rise rate at the initial stage of combustion while shortening the main combustion duration which contributes to the fuel efficiency.

The present inventors have found that an improved fuel efficiency with a suppressed combustion noise can be obtained by introducing a swirling flow into a combustion chamber of a two-valve engine where a tumble flow occurs and maintaining the swirling flow for a long period by using a non-squish region.

To be more specific, by making creative arrangement of an intake passage so as to introduce a swirling flow, the speed with which a mixed gas existing in a region of a combustion chamber near an ignition device flows to an exhaust port can be limited. In this manner, the pressure rise rate can be limited at the initial stage of combustion. Further, by making a creative arrangement of the intake passage so as to orient the tumble flow oblique relative to the exhaust port as well as so as to introduce a swirling flow, a flow resulting from a combination of the tumble flow and the swirling flow near the ignition device is directed from a region where the ignition device is arranged toward a region where the ignition device is not arranged. In this manner, the increase rate of the amount of combusted mixed gas at the late stage of combustion is increased. As a consequence, the main combustion duration can be shortened.

The present teaching is a teaching accomplished based on the finding that both improvement of the fuel efficiency and reduction in the combustion noise can be achieved by introducing and maintaining a swirling flow while employing the conventional design concept which adopts a bearing having a high support stiffness.

Hereunder, the present teaching is described based on preferred embodiments with reference to the drawings.

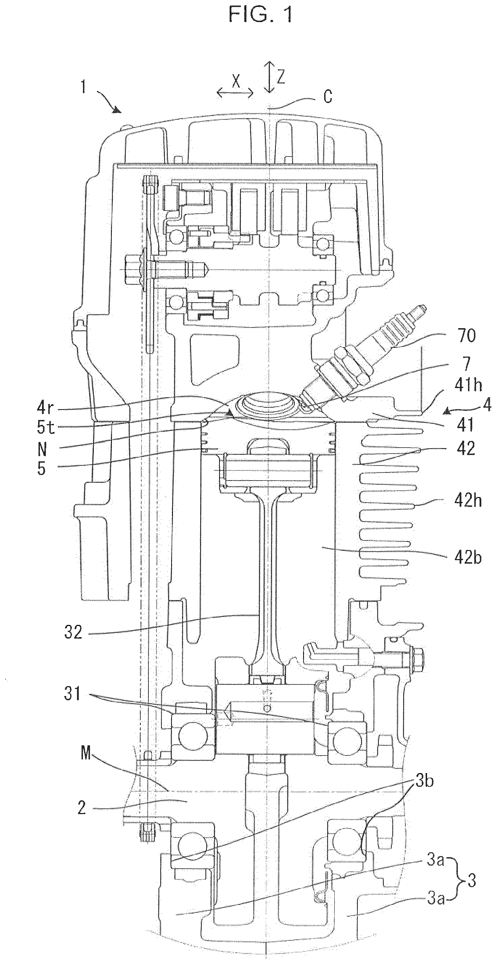

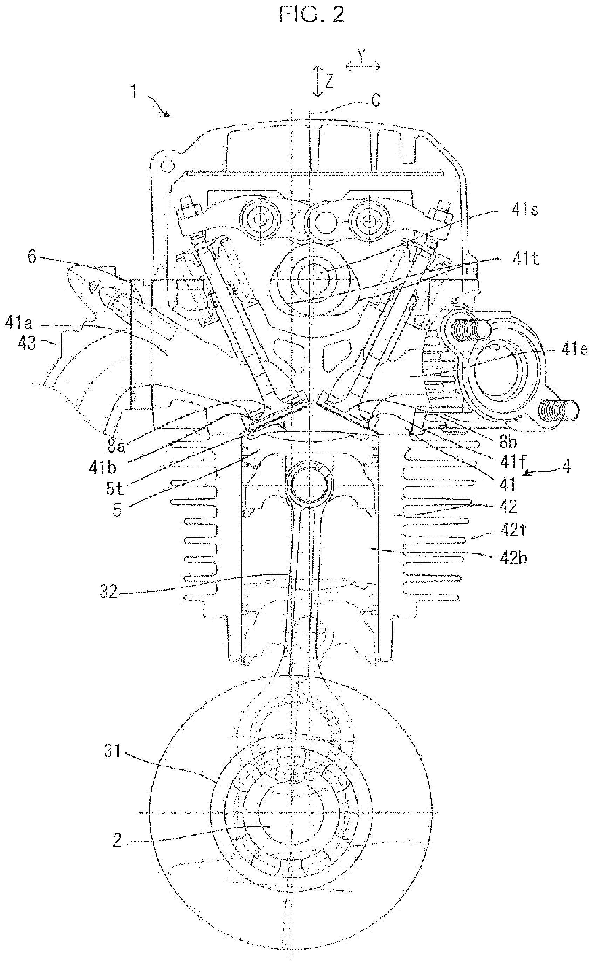

FIGs. 1 and 2 are longitudinal cross-sectional views each showing an outline configuration of a two-valve engine 1 according to an embodiment of the present teaching. In the figures, the reference sign X represents the direction in which a rotation axis line M of a crankshaft 2 extends. The reference sign Z represents the direction in which a central axis line C of a cylinder bore 42b extends (the direction in which a piston part 5 reciprocates). The reference sign Y represents the direction perpendicular to both the direction X of the rotation axis line of the crankshaft 2 and the direction Z of the central axis line of the cylinder bore 42b. FIG. 1 is a longitudinal cross-sectional view schematically showing the two-valve engine 1 as viewed in the direction Y. FIG. 2 is a longitudinal cross-sectional view schematically showing the two-valve engine 1 as viewed in the direction X.

The two-valve engine 1 (hereinafter, also referred to simply as the engine 1) shown in FIGs. 1 and 2 is mounted to a straddled vehicle (not shown) as typified by a motorcycle, for example. In the present teaching, a vehicle to which the engine 1 is mounted is not limited to a straddled vehicle as exemplified by a motorcycle. Examples of such a vehicle include various types of vehicles including automobiles, snowmobiles, and the like. The number of wheels of the vehicle mounted with the engine 1 is not particularly limited. It may be acceptable that the engine 1 is mounted to an apparatus or a device (e.g., a generator) different from the vehicle. The engine 1 is a single-cylinder four-stroke engine.

The engine 1 includes the crankshaft 2, a crank casing part 3, a cylinder part 4, the piston part 5, a fuel injector part 6, an ignition device 7, an intake valve 8a, and an exhaust valve 8b.

In this embodiment, the engine 1 mounted to a straddled vehicle (not shown) is described. The engine 1 is arranged in the straddled vehicle such that the direction X substantially coincides with the width direction of the straddled vehicle and the direction Y substantially coincides with the front-back direction of the straddled vehicle. Hereinafter, the direction X is also referred to as the width direction of the engine 1. The direction Y is also referred to as the front-back direction of the engine 1. The posture with which the engine 1 is mounted to the vehicle is not limited to the one illustrated in this embodiment. For example, the front-back direction Y of the engine 1 may not always have to be parallel to a horizontal plane but may be at an angle relative to the horizontal plane. In other words, the front-back direction Y of the engine 1 may be at an angle relative to the front-back direction of the straddled vehicle.

The cylinder part 4 includes a cylinder head part 41 and a cylinder body part 42. The crank casing part 3, the cylinder body part 42 and the cylinder head part 41 are stacked in this order and fastened to one another. In FIG. 2, for the sake of clarity of the structure, the crank casing part 3 is not shown.

The engine 1 includes bearings 31 that support the crankshaft 2 in a freely rotatable manner. The bearings 31 are rolling bearings. The bearings 31 are, for example, ball bearings. The crankshaft 2 is supported on the crank casing part 3 by the bearings 31.

As shown in FIG. 1, the crank casing part 3 is divided across the width direction X into two casing parts 3a. The two casing parts 3a are fastened in the width direction X, to form the crank casing part 3. Each of the two casing parts 3a is provided with a support portion 3b for supporting the bearing 31. The bearing 31 is fitted in the support portion 3b of each casing part 3a. Each bearing 31 supports each journal of the crankshaft 2 extending in the width direction X.

The cylinder bore 42b is provided in the cylinder body part 42. The cylinder bore 42b is a space within the cylinder body part 42, and in this embodiment, has a columnar shape extending in the direction Z.

The piston part 5 is housed in the cylinder bore 42b. The piston part 5 is arranged so as to be reciprocatable in the direction Z. The piston part 5 is coupled to the crankshaft 2 via a connecting rod 32. One end of the connecting rod 32 is freely rotatably supported on the crankshaft 2, and the other end of the connecting rod 32 is freely rotatably supported on the piston part 5. The crankshaft 2 is rotated along with reciprocation of the piston part 5.

The cylinder part 4 cooperates with the piston part 5 to define a combustion chamber 4r. The engine 1 of this embodiment is an air-cooled engine, and heat dissipation fins 41h and 42h are provided on the exteriors of the cylinder head part 41 and the cylinder body part 42, respectively.

The cylinder head part 41 has one intake passage 41a and one exhaust passage 41e. Each of the intake passage 41a and the exhaust passage 41e communicates with the combustion chamber 4r. The cylinder head part 41 has an intake port 41b and an exhaust port 41f.

The intake port 41b is a portion of the intake passage 41a that opens into the combustion chamber 4r. The exhaust port 41f is a portion of the exhaust passage 41e that opens into the combustion chamber 4r. The intake port 41b and the exhaust port 41f communicate with the intake passage 41a and the exhaust passage 41e, respectively. The intake port 41b is opened and closed by the intake valve 8a. The exhaust port 41f is opened and closed by the exhaust valve 8b.

The intake passage 41a is formed so as to extend in a curve toward the upstream side from the intake port 41b of the combustion chamber 4r within the cylinder head part 41. The end (upstream end) of the intake passage 41a opposite to the intake port 41b opens on an outer surface of the cylinder head part 41. The end (upstream end) of the intake port 41b is coupled with an intake tube 43.

The exhaust passage 41e is formed so as to extend in a curve toward the downstream side from the exhaust port 41f of the combustion chamber 4r within the cylinder head part 41. The end (downstream end) of the exhaust passage 41e opposite to the exhaust port 41f opens on the outer surface of the cylinder head part 41. The end (downstream end) of the exhaust port 41f is coupled with an exhaust tube (not shown).

The fuel injector part 6 is attached to the cylinder head part 41 so as to be directed to the intake passage 41a. The fuel injector part 6 injects a fuel to the intake passage 41a. The fuel injector part 6 injects a fuel to a position upstream of the intake port 41b. The fuel injector part 6 injects a fuel to outside air flowing in the intake passage 41a, thus creating a mixed gas. The mixed gas contains air and the fuel. The mixed gas is supplied to the combustion chamber 4r through the intake port 41b.

In the cylinder head part 41, a cam shaft 41s is provided in a freely rotatable manner. The cam shaft 41s has a cam 41t. The cam shaft 41s and the cam 41t are integrally rotated along with rotation of the crankshaft 2. Movement of the cam 41t causes each of the intake valve 8a and the exhaust valve 8b to linearly reciprocate within a predetermined range, thus opening and closing the intake port 41b and the exhaust port 41f.

The ignition device 7 is provided in the cylinder head part 41. The ignition device 7 is a part that ignites a mixed gas in the combustion chamber 4r. In this embodiment, the ignition device 7 is a portion of an ignition plug 70 attached to the cylinder head part 41, the portion exposed in the combustion chamber 4r.

In the engine 1 of this embodiment, only one intake valve 8a and only one exhaust valve 8b are provided for one cylinder bore 42b. Thus, only one intake passage 41a and only one exhaust passage 41e are connected to one combustion chamber 4r. The one combustion chamber 4r has only one intake port 41b and only one exhaust port 41f.

In the engine 1 of this embodiment, the combustion chamber 4r has a non-squish region N that is provided in at least part of a peripheral region of the combustion chamber 4r with respect to the radial direction of the cylinder bore 42b.

The non-squish region N is a region where a raised portion for producing a squish effect is not provided in at least the cylinder head part 41 of the cylinder head part 41 and the piston part 5. The squish effect is an effect of generating turbulence and/or vortex of a mixed gas flow in the combustion chamber 4r as a result of the piston part 5 rising to push out part of the mixed gas existing between the cylinder head part 41 and a top surface 5t of the piston part 5.

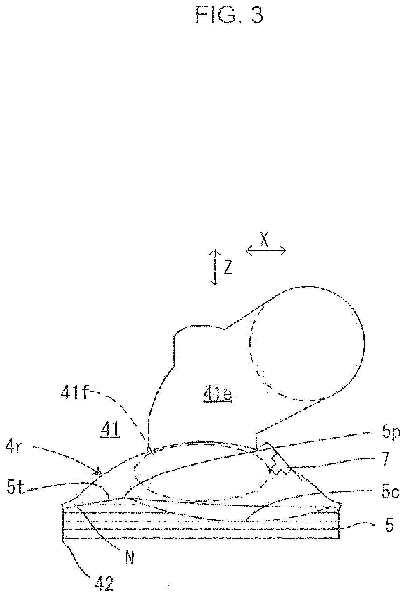

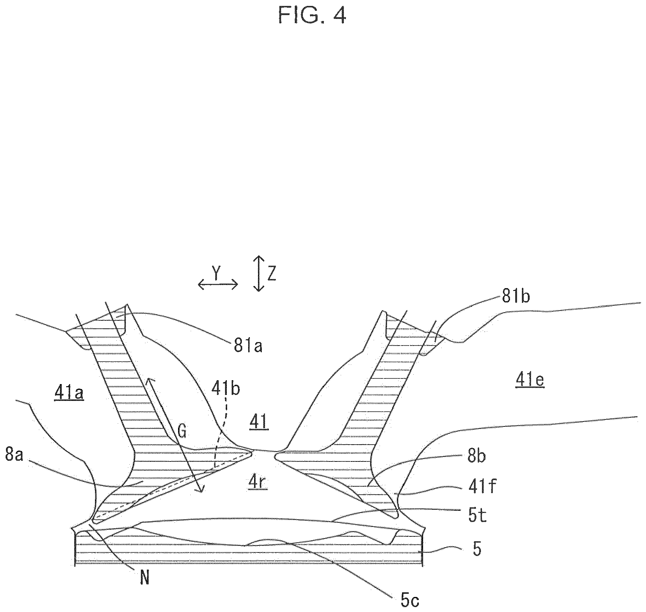

FIG. 3 is a cross-sectional view showing, on an enlarged scale, the combustion chamber 4r and therearound of the engine 1 shown in FIG. 1. FIG. 4 is a cross-sectional view showing, on an enlarged scale, the combustion chamber 4r and therearound of the engine 1 shown in FIG. 2.

In FIGs. 3 and 4, the combustion chamber 4r has the non-squish region N that is provided in the peripheral region of the combustion chamber 4r with respect to the radial direction of the cylinder bore 42b. In the non-squish region N, the cylinder head part 41 is not provided with a raised portion for producing the squish effect.

In the non-squish region N of this embodiment, which is shown in FIGs. 3 and 4, a raised portion for producing the squish effect is provided neither in the cylinder head part 41 nor in the piston part 5.

In the non-squish region N of this embodiment, substantially no step is provided in a region where an inside upper surface of the cylinder head part 41 and an inner circumferential surface of the cylinder body part 42 are adjacent to and continuous with each other.

In the non-squish region N, a spacing distance between the cylinder head part 41 and the piston part 5 with respect to the central axis line direction Z of the cylinder bore 42b continuously increases from outside to inside with respect to the radial direction of the cylinder bore 42b.

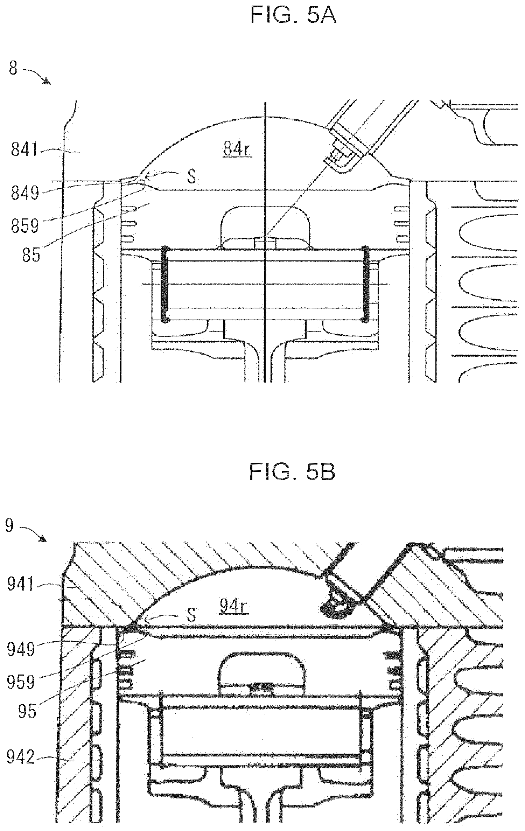

FIG. 5A is a cross-sectional view showing an engine according to a first reference example in which a raised portion is provided for producing the squish effect. FIG. 5B is a cross-sectional view showing an engine according to a second reference example in which another raised portion is provided.

An engine 8 of the first reference example shown in FIG. 5A is an engine disclosed in Non-patent Literature 1. The engine 8 of the first reference example shown in FIG. 5A has a squish region S that is provided in a peripheral region of a combustion chamber 84r with respect to the radial direction. In the squish region S, a cylinder head part 841 has a protruding portion 849, and a piston part 85 has a protruding portion 859. The protruding portion 849 of the cylinder head part 841 is provided such that a spacing distance between the cylinder head part 841 and the piston part 85 with respect to the central axis line direction is substantially maintained from outside to inside with respect to the radial direction. Therefore, in the engine 8 of the reference example shown in FIG. 5A, a mixed gas interposed between the piston part 85 and the cylinder head part 841 in the squish region S is pushed out radially inward as the piston part 85 moves up. Thus, the engine 8 of the first reference example causes the squish effect.

An engine 9 of the second reference example shown in FIG. 5B also has a squish region S that is provided in a peripheral region of a combustion chamber 94r with respect to the radial direction. In the squish region S, a cylinder head part 941 has a protruding portion 949. The protruding portion 949 of the cylinder head part 941 is formed by a step that is provided in a region where an inside upper surface of the cylinder head part 941 and an inner circumferential surface of a cylinder body part 942 are adjacent to and continuous with each other. A piston part 95 has a protruding portion 959. In the second reference example shown in FIG. 5B, a spacing distance between the cylinder head part 941 and the piston part 95 with respect to the central axis line direction continuously decreases from outside to inside with respect to the radial direction. Therefore, in the engine 9 of the reference example shown in FIG. 5B, a mixed gas interposed between the piston part 95 and the cylinder head part 941 in the squish region S is pushed out radially inward as the piston part 95 moves up. Thus, the engine 9 of the second reference example also causes the squish effect.

In the non-squish region N of this embodiment, which is shown in FIGs. 3 and 4, a raised portion for producing the squish effect such as the protruding portion 859 shown in FIG. 5A is not provided. In the non-squish region N of this embodiment, the step shown in FIG. 5B is not provided, and a protruding portion for producing the squish effect such as the protruding portion 959 shown in FIG. 5B is not provided.

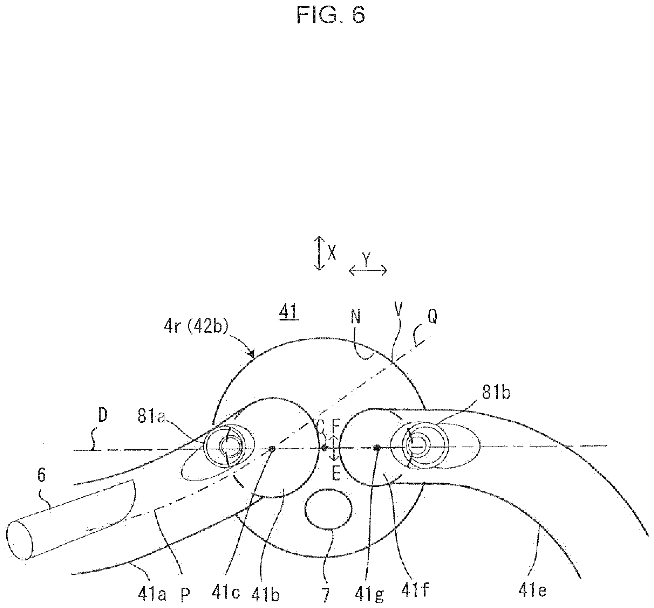

FIG. 6 is a perspective view showing an interior structure of the cylinder head part 41 shown in FIGs. 1 and 2, as viewed in the direction Z of the central axis line C of the cylinder bore 42b. FIG. 6 shows elements included in the cylinder head part 41, as viewed in the direction from the cylinder head part 41 to the crankshaft 2. FIG. 6 also schematically shows the fuel injector part 6 and valve support portions 81a and 81b that support the intake valve 8a and the exhaust valve 8b, respectively.

The engine 1 of this embodiment is a two-valve engine. When viewed in the direction Z of the central axis line C of the cylinder bore 42b, the combustion chamber 4r has a circular shape or a substantially circular shape. In the combustion chamber 4r, one intake port 41b and one exhaust port 41f are arranged side by side. The intake port 41b and the exhaust port 41f are arranged side by side at an interval in the front-back direction Y. The area of the exhaust port 41f is smaller than the area of the intake port 41b. When viewed in the direction Z of the central axis line C of the cylinder bore 42b, both the intake port 41b and the exhaust port 41f entirely overlap the combustion chamber 4r with respect to the direction Z. When viewed in the direction Z of the central axis line C of the cylinder bore 42b, the exhaust port 41f entirely overlaps the intake port 41b with respect to the front-back direction Y. When viewed in the direction Z of the central axis line C of the cylinder bore 42b, the center 41g of the exhaust port 41f overlaps the intake port 41b with respect to the front-back direction Y. When viewed in the direction Z of the central axis line C of the cylinder bore 42b, the center 41c of the intake port 41b overlaps the exhaust port 41f with respect to the front-back direction Y. When viewed in the direction Z of the central axis line C of the cylinder bore 42b, the central axis line C of the cylinder bore 42b is positioned between the intake port 41b and the exhaust port 41f with respect to the front-back direction Y. When viewed in the direction Z of the central axis line C of the cylinder bore 42b, the central axis line C of the cylinder bore 42b overlaps both the intake port 41b and the exhaust port 41f with respect to the front-back direction Y. The ignition device 7 is arranged at a distance from the central axis line C of the cylinder bore 42b. When viewed in the direction of the central axis line C, the ignition device 7 is arranged at a distance from the center of the combustion chamber 4r. When viewed in the direction Z of the central axis line C of the cylinder bore 42b, the ignition device 7 is positioned between the center 41c of the intake port 41b and the center 41g of the exhaust port 41f with respect to the front-back direction Y. The combustion chamber 4r is divided into two regions by a straight line D passing through the center 41c of the intake port 41b and the center 41g of the exhaust port 41f. The ignition device 7 is arranged in one of the two regions. Of the two regions, the region where the ignition device 7 is arranged will be referred to as an ignition device region E. The region where the ignition device 7 is not arranged will be referred to as a non-ignition-device region F. The ignition device region E and the non-ignition-device region F are defined by the division based on the straight line D.

When viewed in the direction of the central axis line C, the intake passage 41a of the engine 1 is oriented oblique relative to the exhaust port 41f. The center line P of the intake passage 41a extends to the center 41c of the intake port 41b. When viewed in the direction of the central axis line C, the straight line Q which is an extension of the center line P of the intake passage 41a from the center 41c of the intake port 41b does not pass through the center 41g of the exhaust port 41f. The straight line Q is a semi-straight line extending in a downstream direction from the center 41c of the intake port 41b toward the inside of the combustion chamber 4r. The straight line Q is a straight line extending from the center 41c and having the orientation of the center line P of the intake passage 41a at the center 41c of the intake port 41b.

As described above, the combustion chamber 4r has a non-squish region N that is provided in at least a part of the peripheral region of the combustion chamber 4r with respect to the radial direction of the cylinder bore 42b.

When viewed in the direction of the central axis line C, the straight line Q extending from the center 41c of the intake port 41b passes through the non-ignition-device region F and the non-squish region N. In other words, when viewed in the direction of the central axis line C, the non-ignition-device region F and the non-squish region N are arranged on the straight line Q. In this embodiment, when viewed in the direction of the central axis line C, the straight line Q passes through the non-ignition-device region F and extends to the non-squish region N without overlapping the exhaust port 41f. When viewed in the direction Z of the central axis line C of the cylinder bore 42b, the intersection point V between the straight line Q and the outer edge of the combustion chamber 4r is located forward (downstream) of the center 41c of the intake port 41b with respect to the front-back direction Y. When viewed in the direction Z of the central axis line C of the cylinder bore 42b, the intersection point V is located forward (downstream) of the central axis line C of the cylinder bore 42b with respect to the front-back direction Y.

In this embodiment, the non-squish region N of the combustion chamber 4r is provided in a portion of the peripheral region of the combustion chamber 4r, the portion corresponding at least to the entire non-ignition-device region F where the ignition device 7 is not arranged.

To be more specific, the non-squish region N of the combustion chamber 4r is provided in the entire peripheral region of the combustion chamber.

The intake passage 41a is oriented oblique relative to the exhaust port 41f. When viewed in the direction Z of the central axis line C of the cylinder bore 42b, the center line P of the intake passage 41a which extends through the intake passage 41a to the center 41c of the intake port 41b passes through the ignition device region E but does not pass on the non-ignition-device region F.

When viewed in the direction of the central axis line C of the cylinder bore 42b, the intake passage 41a is in the shape of a curving arc or an arc located upstream of the intake port 41b. The ignition device 7 is arranged outside the arc. No particular limitation is put on the arc, and examples thereof include an arc of a true circle or a substantive true circle and an arc of an ellipse or a substantive ellipse.

The intake valve 8a and the exhaust valve 8b (FIG. 4), which are supported by the valve support portions 81a, 81b arranged in the intake passage 41a and the exhaust passage 41e, extend to the intake port 41b and the exhaust port 41f, respectively. An opening direction G of the intake port 41b is identical or substantially identical to an open-close direction of the intake valve 8a. The opening direction G of the intake port 41b is oriented to the rear side (downstream side) in the front-back direction Y, and oriented downward (toward the piston part 5) in the direction Z.

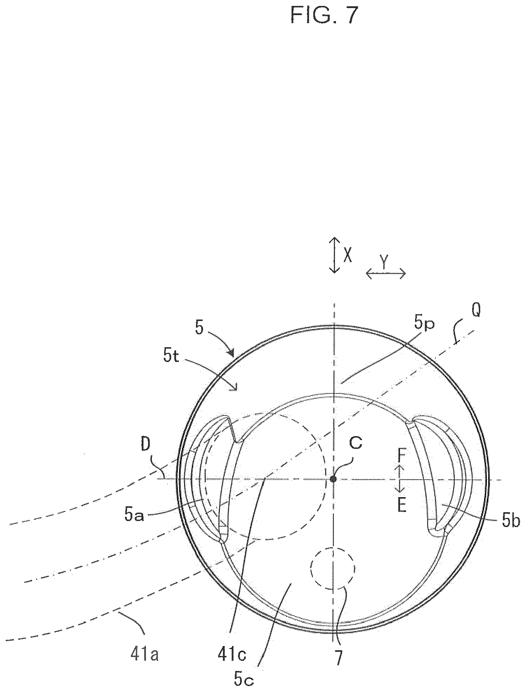

FIG. 7 shows the top surface 5t, as the piston part 5 is viewed in the direction of the central axis line C of the cylinder bore 42b.

Referring to FIGs. 3, 4, and 7, the shape of the piston part 5 is described.

The piston part 5 has, in the top surface 5t of the piston part 5, a concave portion 5c that is recessed from its surrounding. The concave portion 5c has a circular shape, when viewed in the direction of the central axis line C of the cylinder bore 42b. In this embodiment, the concave portion 5c is in the shape of a spherical surface.

On the top surface 5t of the piston part 5 are also provided valve recesses 5a, 5b for avoiding interference with the intake valve 8a and the exhaust valve 8b. The valve recesses 5a, 5b are adjacent to the concave portion 5c. The valve recesses 5a, 5b receive parts of the intake valve 8a and the exhaust valve 8b, respectively. The concave portion 5c, which is a portion different from the valve recesses 5a, 5b, does not receive the intake valve 8a and the exhaust valve 8b.

The concave portion 5c, which is provided in the top surface 5t of the piston part 5, is located eccentrically with respect to the width direction X. When viewed in the direction of the central axis line C of the cylinder bore 42b, the area over which the concave portion 5c overlaps the ignition device region E is larger than the area over which the concave portion 5c overlaps the non-ignition-device region F. The concave portion 5c has such a spherical surface that the deepest portion of the concave portion 5c is in the ignition device region E.

When viewed in the direction of the central axis line C, the straight line Q extending from the center 41c of the intake port 41b passes through the non-ignition-device region F where the ignition device 7 is not arranged and which overlaps the concave portion 5c over a smaller area. In other words, when viewed in the direction of the central axis line C, the non-ignition-device region F where the ignition device 7 is not arranged and which overlaps the concave portion 5c over a smaller area is arranged on the straight line Q.

On the top surface 5t of the piston part 5 is provided a convex portion 5p (see FIG. 3). The convex portion 5p protrudes from the top surface 5t of the piston part 5 toward the cylinder head part 41. The convex portion 5p protrudes toward the cylinder head part 41 from the surrounding of the top surface 5t in the radial direction of the cylinder bore 42b.

When viewed in the direction of the central axis line C of the cylinder bore 42b, the convex portion 5p is arranged in the non-ignition-device region F. The convex portion 5p and the concave portion 5c are juxtaposed in the width direction X. The convex portion 5p neighbors the concave portion 5c. When viewed in the direction of the central axis line C of the cylinder bore 42b, the convex portion 5p is in the shape of an arc abutting the edge of the circular concave portion 5c.

In the above-described engine 1, when the intake valve 8a moves to open the intake port 41b, the mixed gas flows through the intake passage 41a and then through the intake port 41b into the combustion chamber 4r along with movement of the piston part 5. In the combustion chamber 4r, a vortex of the mixed gas occurs.

The vortex of the mixed gas, which occurs in the combustion chamber 4r, has a swirling flow component and a tumble flow component, the swirling flow component flowing around the central axis line C, the tumble flow component flowing around a line perpendicular to the central axis line C. That is, a combined flow of a swirling flow and a tumble flow occurs in the combustion chamber.

Explained in more detail, movement of the intake valve 8a allows the mixed gas existing in the intake passage 41a to flow radially outward from an annular gap formed at the intake port 41b. Here, in a portion of the annular gap surrounding the intake valve 8a, the mixed gas flow is likely to be hindered by an inner wall in the peripheral region of the combustion chamber 4r, the portion located near the peripheral region of the combustion chamber 4r when viewed in the direction of the central axis line C of the cylinder bore 42b. Thus, the flow rate of the mixed gas near the peripheral region of the combustion chamber 4r is less than the flow rate of the mixed gas near the center of the combustion chamber 4r. The mixed gas in its entirety, therefore, tends to flow toward the center of the combustion chamber 4r after entering the combustion chamber 4r from the intake port 41b, when viewed in the direction of the central axis line C.

The mixed gas has an inertia and a viscosity. When the mixed gas flows through the intake passage 41a and enters the combustion chamber 4r, the orientation of the mixed gas flow is affected by the direction and shape of the intake passage 41a.

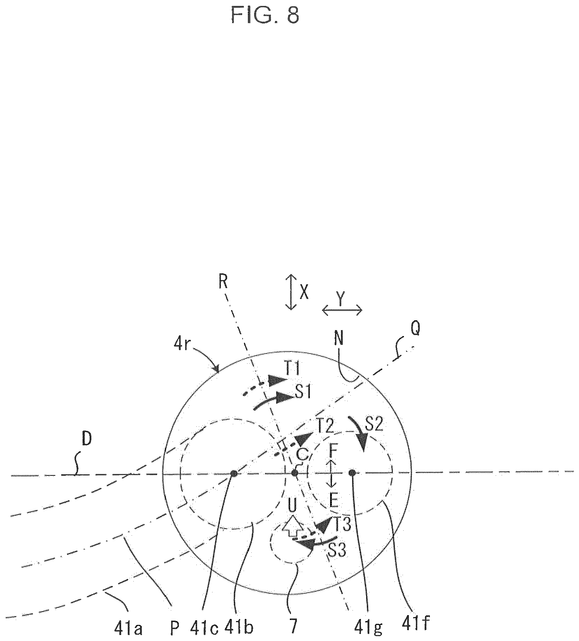

FIG. 8 shows how principal elements are arranged and the mixed gas flows in the combustion chamber 4r of the engine 1.

In FIG. 8, three arrows T1 to T3 schematically indicate tumble flow orientations. The arrows T1 to T3 indicate a mixed gas flow in a space near the cylinder head part 41 in the combustion chamber 4r formed between the piston part 5 and the cylinder head part 41.

In the example shown in FIG. 8, the tumble flow (T1 to T3) is a flow circling around a line R that intersects the central axis line C.

When viewed in the direction of the central axis line C, the straight line Q which is an extension of the center line P of the intake passage 41a from the center 41c of the intake port 41b passes through the non-squish region N and the non-ignition-device region F where the ignition device 7 is not arranged. Therefore, the direction in which a main portion of the mixed gas having entered the combustion chamber 4r from the intake port 41b flows is the same as or similar to the direction of the straight line Q which is an extension of the center line P of the intake passage 41a from the intake port 41b. Thus, the tumble flow (T1 to T3) occurs in a direction roughly parallel to the straight line Q which is an extension of the center line P of the intake passage 41a from the intake port 41b. The tumble flow (T1 to T3) is not oriented in the direction from the intake port 41b to the exhaust port 41f, but oriented oblique relative to the direction from the intake port 41b to the exhaust port 41f. The tumble flow (T1 to T3) occurs in such a direction as to extend from the center 41c of the intake port 41b and pass through the non-ignition-device region F.

Since the tumble flow (T1 to T3) circles around the line R intersecting the central axis line C, the above-described oblique tumble flow orientations T1 to T3 is substantially common not only in the vicinity of the intake port 41b but also in the vicinity of the ignition device 7. Therefore, the tumble flow orientation (T3) in the vicinity of the ignition device 7 contains a component oriented from the intake port 41b toward the exhaust port 41f, which means a component in the front-back direction Y, and a component oriented from the ignition device 7 toward the non-ignition-device region F, which means a component in the width direction X.

On the other hand, the swirling flow of the mixed gas is a flow circling around the central axis line C.

In FIG. 8, three arrows S1 to S3 schematically indicate swirling flow orientations.

When viewed in the direction of the central axis line C, the straight line Q which is an extension of the center line P of the intake passage 41a from the center 41c of the intake port 41b passes through the non-squish region N and the non-ignition-device region F where the ignition device 7 is not arranged. Therefore, the direction in which a main portion of the mixed gas having entered the combustion chamber 4r from the intake port 41b flows is the same as or similar to the direction of the straight line Q which is an extension of the center line P of the intake passage 41a from the intake port 41b. As a result, the swirling flow (S1 to S3) circles around the central axis line C in such a direction as to pass through the intake port 41b, the exhaust port 41f, and the ignition device 7 in this order (clockwise in FIG. 8).

As shown in FIG. 6, the intake passage 41a is provided so as to form a curving arc on the upstream side of the intake port 41b, when viewed in the direction of the central axis line C of the cylinder bore 42b. The ignition device 7 is arranged outside the curving arc, when viewed in the direction of the central axis line C of the cylinder bore 42b. This strengthens the swirling flow of the mixed gas having passed through the intake passage 41a. In this embodiment, when viewed in the direction of the central axis line C, the straight line Q passes through the non-ignition-device region F where the ignition device 7 is not arranged and extends to the non-squish region N without overlapping the exhaust port 41f. Thus, the intake passage 41a is oriented at a greater angle relative to the exhaust port 41f as compared with, for example, a configuration in which the straight line Q overlaps the exhaust port 41f. This further strengthens the swirling flow of the mixed gas having passed through the intake passage 41a. It is therefore easy to maintain the swirling flow in the combustion chamber 4r.

In the example shown in FIG. 8, the swirling flow orientation S3 in the vicinity of the ignition device 7 is substantially the same as the orientation from the exhaust port 41f toward the intake port 41b.

The combustion chamber 4r has the non-squish region N that is provided in at least a part of the peripheral region of the combustion chamber 4r with respect to the radial direction of the cylinder bore 42b. The non-squish region N is a region where, of the cylinder head part and the piston part, at least the cylinder head part is not provided with a raised portion for producing the squish effect.

The intake passage 41a is arranged such that the non-squish region N is located on the straight line Q which is an extension of the center line P of the intake passage 41a from the center 41c of the intake port 41b, when viewed in the direction of the central axis line C. When viewed in the direction of the central axis line C, the mixed gas having entered the combustion chamber 4r from the intake port 41b occurs mainly in a direction parallel to the straight line Q which is an extension of the center line P of the intake passage 41a. Thus, the mixed gas having entered the combustion chamber 4r from the intake port 41b flows toward the non-squish region N.

In the engine 1 of this embodiment, the non-squish region N is located on the straight line Q which is an extension of the center line P of the intake passage 41a. That is, a raised portion for producing the squish effect is not provided to the cylinder head part 41 in the peripheral region of the combustion chamber 4r toward which the mixed gas flows after entering the combustion chamber 4r from the intake port 41b. This makes it easy to maintain the swirling flow of the mixed gas without hindrance thereto. In the non-squish region N, as shown in FIGs. 3 and 4, the spacing distance between the cylinder head part 41 and the piston part 5 with respect to the central axis line direction Z of the cylinder bore 42b continuously increases from outside to inside with respect to the radial direction of the cylinder bore 42b. In addition, substantially no step is provided in the region where the inside upper surface of the cylinder head part 41 and the inner circumferential surface of the cylinder body part 42 are adjacent to and continuous with each other. This makes it easy to maintain the swirling flow of the mixed gas without hindrance thereto.

In the engine 1 of this embodiment, the non-squish region N is provided in a portion of the peripheral region of the combustion chamber 4r, the portion corresponding to the entire non-ignition-device region F and the entire peripheral region of the combustion chamber 4r. Accordingly, the flow of the mixed gas having entered the combustion chamber 4r from the intake port 41b is less likely to be hindered. It is therefore easy to maintain the swirling flow.

The top surface 5t of the piston part 5 has the concave portion 5c. As shown in FIG. 7, the area over which the concave portion 5c overlaps the ignition device region E is larger than the area over which the concave portion 5c overlaps the non-ignition-device region F where the ignition device is not arranged. Due to the concave portion 5c, a wide space for forming the combustion chamber 4r can be ensured around the ignition device 7 even when the piston part 5 moves to the vicinity of the top dead center, as shown in FIG. 3.

When viewed in the direction of the central axis line C, the straight line Q extending from the center 41c of the intake port 41b passes through the non-ignition-device region F which overlaps the concave portion 5c over a smaller area and where the ignition device 7 is not arranged. Accordingly, the flow of the mixed gas having entered the combustion chamber 4r from the intake port 41b tends to be guided to the ignition device region E which overlaps the concave portion 5c with a larger area.

As a result, the swirling flow of the mixed gas around the ignition device 7 is easily maintained, even when the piston part 5 moves to the top dead center.

In the combustion chamber 4r, a combined flow of the tumble flow and the swirling flow occurs.

Referring to FIG. 8, of the tumble flow in the vicinity of the ignition device 7, which is indicated by the arrow T3, a component oriented from the intake port 41b toward the exhaust port 41f which means a component in the front-back direction Y is diminished by the swirling flow oriented in the opposite direction, which is indicated by the arrow S3. Consequently, the mixed gas in the vicinity of the ignition device 7 flows from the ignition device region E toward the non-ignition-device region F. In FIG. 8, an arrow U schematically indicates the mixed gas flow orientation in the vicinity of the ignition device 7.

The mixed gas in the combustion chamber 4r, when ignited by the ignition device 7, starts to combust. Flame caused by the ignition tends to propagate and spread along the mixed gas flow itself.

In the engine 1 of this embodiment, in the vicinity of the ignition device 7 of the combustion chamber 4r, a component of the tumble flow T3 is diminished by the swirling flow S3, the component having the same orientation as the orientation from the intake port 41b toward the exhaust port 41f. As a result, the mixed gas flow is gentle in the vicinity of the ignition device 7. This suppresses rapid propagation of the flame caused by the ignition toward the exhaust port 41f at an initial stage of combustion.

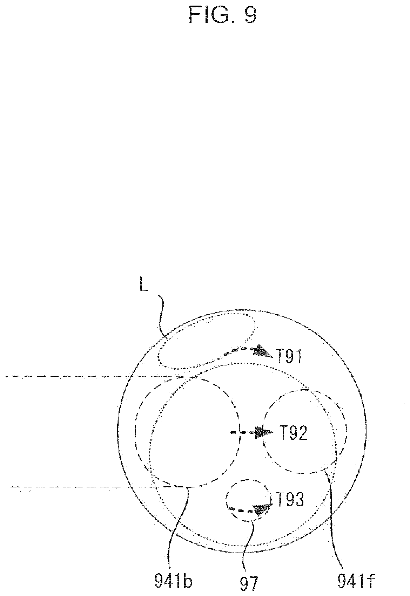

FIG. 9 is a schematic diagram showing how a mixed gas flows in an engine configured to generate substantially no swirling flow, which is a comparative example of this embodiment.

In the comparative example shown in FIG. 9, only a tumble flow indicated by arrows T91 to T93 occurs.

The tumble flow T93 in the vicinity of an ignition device 97 has substantially the same orientation as the orientation from an intake port 941b toward an exhaust port 941f. In the comparative example shown in FIG. 9, flame caused upon ignition by the ignition device 97 tends to rapidly propagate from the intake port 941b toward the exhaust port 941f at an initial stage of combustion. As a result, a rapid pressure rise and an increased occurrence of a combustion noise are caused at the initial stage of combustion.

Since the flame propagates from the intake port 941b toward the exhaust port 941f, a region L is likely to occur at a position distant from the ignition device 97, the region L being left behind the flame propagation to cause delay in combustion. A main combustion duration in the expansion stroke is prolonged accordingly. This deteriorates the fuel efficiency.

For example, providing a squish region for the purpose of expediting combustion in the region L involves a high risk of a decrease in flowability of the mixed gas in the entire combustion chamber. Providing a squish region also involves a risk that fuel in the mixed gas might be left uncombusted.

The engine 1 of this embodiment suppresses rapid propagation of flame caused by ignition toward the exhaust port 41f at an initial stage of combustion, as shown in FIG. 8. Thus, a rapid pressure rise at the initial stage of combustion is suppressed, and occurrence of a combustion noise is suppressed. Accordingly, a combustion noise is suppressed even when, for example, a ball bearing with a low support stiffness is adopted as the bearing 31 that supports the crankshaft 2.

In the engine 1, as indicated by the arrow U in FIG. 8, the mixed gas in the vicinity of the ignition device 7 flows from the ignition device region E where the ignition device 7 is arranged toward the non-ignition-device region F where the ignition device 7 is not arranged. This easily allows flame produced by the ignition device 7 to quickly spread from the vicinity of the ignition device 7 to the entire combustion chamber 4r. Thus, time required for the flame to spread over a main region of the combustion chamber 4r is shortened. In other words, the main combustion duration in the expansion stroke is shortened.

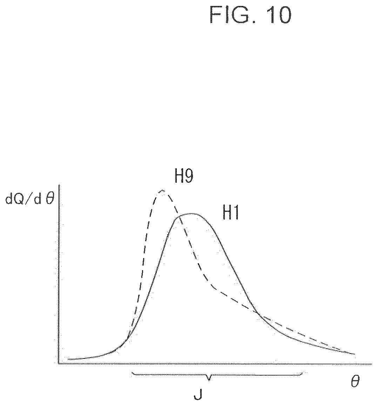

FIG. 10 is a graph for explaining the state of combustion of the mixed gas in the engine. In the graph of FIG. 10, the vertical axis represents the heat generation rate dQ/dθ, and the horizontal axis represents the rotation angle θ of the crankshaft 2. The line H1 schematically indicates characteristics of the heat generation rate in the engine 1, and the line H9 schematically indicates characteristics of the heat generation rate in the comparative example shown in FIG. 9.

A main combustion duration J is represented as the crank angle from when 10 percent of the amount of heat generated in one cycle occurs to when 90 percent of the amount of heat generated in one cycle occurs.

The engine 1 of this embodiment suppresses rapid propagation of flame toward the exhaust port at an initial stage of combustion. Accordingly, the heat generation rate H1 exhibits a smaller peak value than the heat generation rate H9 of the comparative example does, and in addition, the heat generation rate H1 has a lower increase rate. Moreover, the engine 1 of this embodiment easily allows flame to quickly spread from the vicinity of the ignition device 7 to the entire combustion chamber 4r, which shortens the main combustion duration J. Accordingly, the fuel efficiency is improved.

As thus far described, the engine 1 of this embodiment is able to suppress occurrence of a combustion noise while improving the fuel efficiency.

In the engine 1 of this embodiment, the intake passage 41a is provided so as to form a curving arc on the upstream side of the intake port 41b, when viewed in the direction of the central axis line C of the cylinder bore 42b. The ignition device 7 is arranged outside the curving arc. This strengthens the swirling flow of the mixed gas having passed through the intake passage 41a, so that the swirling flow is likely to be maintained. Accordingly, further suppression of occurrence of a combustion noise can be obtained with further improvement in the fuel efficiency.

In the engine 1 of this embodiment, due to the concave portion 5c, a wide space for forming the combustion chamber 4r is ensured around the ignition device 7 even when the piston part 5 moves to the vicinity of the top dead center. This enables the swirling flow of the mixed gas around the ignition device 7 to be easily maintained, even when the piston part 5 moves to the top dead center. This also suppresses a situation in which the mixed gas in the vicinity of the ignition device 7 is cooled by the piston part 5.

Since a bottom portion of the combustion chamber 4r extends in the shape of a spherical surface because there is the concave portion 5c in the shape of a spherical surface; it is further easy to maintain the swirling flow of the mixed gas in the combustion chamber. Accordingly, further suppression of a combustion noise occurrence can be obtained with further improvement in the fuel efficiency.

In the engine 1 of this embodiment, a partial space of the combustion chamber 4r is narrowed by the convex portion 5p provided in the top surface 5t of the piston part 5. The partial space of the combustion chamber 4r which is narrowed by the convex portion 5p is a space that overlaps the convex portion 5p when viewed in the direction of the central axis line of the cylinder bore, and is a space within the non-ignition-device region F which is distant from the ignition device 7.

In a space distant from the ignition device 7, the mixed gas is likely to be left uncombusted. This space, however, has a portion narrowed by the convex portion 5p, which retards flame propagation so that the mixed gas is kept at a high temperature for a long time. As a result, it is easy for the mixed gas to combust sufficiently. This can reduce the amount of uncombusted mixed gas discharged from the engine 1. Here, the presence of the convex portion 5p has less influence on the main combustion duration, because the percentage of a space corresponding to the convex portion 5p in the combustion chamber 4r is limited.

This embodiment illustrates an example in which, in the non-squish region N, substantially no step is provided in the region where the inside upper surface of the cylinder head part 41 and the inner circumferential surface of the cylinder body part 42 are adjacent to and continuous with each other. Here, a substantive step of the present teaching means a step for producing the squish effect. A step that does not produce the squish effect does not correspond to the substantive step of the present teaching. Therefore, a region having a step that does not produce the squish effect is included in the non-squish region N of the present teaching. For example, a step caused by manufacturing tolerances is different from the substantive step of the present teaching. In addition, a step provided for ensuring a margin of errors, and a step provided for ensuring allowance so as to avoid occurrence of a large cavity above the cylinder body part in a region where the cylinder head part and the cylinder body part are adjacent to each other, are different from the substantive step of the present teaching.

This embodiment illustrates an example in which, in the non-squish region N, the spacing distance between the cylinder head part 41 and the piston part 5 with respect to the central axis line direction Z of the cylinder bore 42b continuously increases from outside to inside with respect to the radial direction of the cylinder bore 42b. This, however, does not limit the present teaching. For example, it may be acceptable that the spacing distance between the cylinder head part and the piston part with respect to the central axis line direction gradually increases. That is, in the non-squish region, there may be an area where the spacing distance is kept constant during the gradual increase in the spacing distance.

This embodiment illustrates an example in which, in the non-squish region N, a raised portion for producing the squish effect is provided neither in the cylinder head part 41 nor in the piston part 5. This, however, does not limit the present teaching. For example, it may be acceptable that a raised portion is provided in the piston part. This is because the piston part provided with a raised portion produces a different mixed gas flow than the cylinder head part provided with a raised portion does.

This embodiment illustrates an example in which the non-squish region N is formed at least throughout the non-ignition-device region F. More specifically, this embodiment illustrates an example in which the non-squish region N is formed throughout the peripheral region of the combustion chamber. This, however, does not limit the present teaching. For example, it may be acceptable that the non-squish region is formed in a part of the peripheral region of the combustion chamber. That is, a squish region for producing the squish effect may be formed in a part of the peripheral region of the combustion chamber. For example, the non-squish region of the present teaching may be formed only in the non-ignition-device region F. The non-squish region of the present teaching may even be formed only in a part of the non-ignition-device region F.

This embodiment illustrates an example in which, when viewed in the direction of the central axis line C, the straight line Q which is an extension of the center line P of the intake passage 41a passes through the non-ignition-device region F where the ignition device 7 is not arranged and extends to the non-squish region N without overlapping the exhaust port 41f. This, however, does not limit the present teaching. For example, it may be acceptable that the straight line, which is an extension of the center line of the intake passage, extends to the non-squish region while overlapping the exhaust port.

This embodiment illustrates an example in which the top surface 5t of the piston part 5 has the convex portion 5p. This, however, does not limit the present teaching. For example, the top surface of the piston part may not have a convex portion.

This embodiment illustrates an example in which the concave portion 5c provided in the top surface 5t of the piston part 5 is in the shape of a spherical surface. This, however, does not limit the present teaching. For example, the concave portion may have a bottom surface in the shape of a flat plate. The top surface of the piston part may even not have a concave portion.

In this embodiment, the intake passage 41a is arranged so as to form a curving arc on the upstream side of the intake port 41b, when viewed in the direction of the central axis line C of the cylinder bore 42b. This, however, does not limit the present teaching. For example, it may be acceptable that the intake passage 41a linearly extends on the upstream side of the intake port 41b.

This embodiment illustrates, as an example, the engine 1 including one cylinder bore 42b, one intake valve 8a, and one exhaust valve 8b. This, however, does not limit the present teaching. For example, the two-valve engine of the present teaching includes two valves in association with one cylinder bore. Here, the number of cylinders included in the two-valve engine of the present teaching is not particularly limited. The two-valve engine of the present teaching may be, for example, a two-valve engine including two cylinder bores and two valves each associated with each of the two cylinder bores. Examples of such an engine include a V-type double-cylinder engine. The V-type double-cylinder engine can be assembled by, for example, inserting a bearing into a hole formed in a crank casing part. That is, it is not necessary to divide the crank casing part at the position of the hole in which the bearing is inserted. This is why the V-type double-cylinder engine is suitable for a rolling bearing.

This embodiment illustrates an example in which a ball bearing is adopted as a journal bearing of the crankshaft. The engine of the present teaching, however, may have a roller bearing as a journal bearing of the crankshaft, for example.

This embodiment illustrates the air-cooled engine as an example. The engine of the present teaching is also applicable to a water-cooled engine.

### Reference Signs List

- 1: engine (two-valve engine)
- 2: crankshaft
- 3: crank casing part
- 4: cylinder part
- 4r: combustion chamber
- 41: cylinder head part
- 41a: intake passage
- 41b: intake port
- 41c: center (of intake port 41b)
- 41e: exhaust passage
- 41f: exhaust port
- 41g: center (of exhaust port 41f)
- 42: cylinder body part
- 42b: cylinder bore
- 5: piston part
- 5c: concave portion
- 5t: top surface
- 5p: convex portion
- 6: fuel injector part
- 7: ignition device
- 8a: intake valve
- 8b: exhaust valve
- C: central axis line
- E: ignition device region
- F: non-ignition-device region
- N: non-squish region

## Claims

1. A two-valve engine comprising:
a crankshaft (2);
a piston part (5) coupled to the crankshaft (2);
a cylinder part (4) configured to cooperate with the piston part (5) to define a combustion chamber (4r), the cylinder part (4) including a cylinder head part (41) and a cylinder body part (42), the cylinder head part (41) having one intake port (41b) and one exhaust port (41f), the one intake port (41b) communicating with an intake passage (41a) and configured to be opened and closed by an intake valve (8a), the one exhaust port (41f) communicating with an exhaust passage (41e) and configured to be opened and closed by an exhaust valve (8b), the cylinder body part (42) having a cylinder bore (42b) in which the piston part (5) is housed;
a fuel injector part (6) that injects a fuel to the intake passage (41a); and
an ignition device (7),
the combustion chamber (4r) being divided into a first region (E) and a second region (F) by a straight line (D) passing through a center (41c) of the intake port (41b) and a center (41g) of the exhaust port (41f), when viewed in the direction of a central axis line (C) of the cylinder bore (42b),
the ignition device (7) being arranged in the first region (E) and not on the straight line (D) passing through the center (41c) of the intake port (41b) and the center (41g) of the exhaust port (41f), and
the combustion chamber (4r) having a non-squish region (N) that is provided in at least a part of a peripheral region of the combustion chamber (4r) with respect to the radial direction of the cylinder bore (42b), the non-squish region (N) being a region where, of the cylinder head part (41) and the piston part (5), at least the cylinder head part (41) is not provided with a raised portion for producing a squish effect, and where substantially no step is provided in a region where an inside upper surface of the cylinder head part (41) and an inner circumferential surface of the cylinder body part (42) are adjacent to and continuous with each other,
**characterized in that**
the intake passage (41a) is arranged such that the second region (F) where the ignition device (7) is not arranged and the non-squish region (N) are located on a straight line (Q) that is an extension of a center line (P) of the intake passage (41a) from the center (41c) of the intake port (41b), when viewed in the direction of the central axis line (C) of the cylinder bore (42b), and
the two-valve engine comprises a rolling bearing configured to support the crankshaft (2).

2. The two-valve engine according to claim 1, wherein
the intake passage (41a) is arranged so as to form a curving arc on an upstream side of the intake port (41b) when viewed in the direction of the central axis line (C) of the cylinder bore (42b), and
the ignition device (7) is arranged outside the curving arc when viewed in the direction of the central axis line (C) of the cylinder bore (42b).

3. The two-valve engine according to claim 1 or 2, wherein
the piston part (5) has, in a top surface (5t) of the piston part (5), a concave portion (5c) that is recessed from a surrounding thereof, and
the concave portion (5c) is provided such that the area over which the concave portion (5c) overlaps the first region (E) where the ignition device (7) is arranged is larger than the area over which the concave portion (5c) overlaps the second region (F) where the ignition device (7) is not arranged, when viewed in the direction of the central axis line (C) of the cylinder bore (42b).

4. The two-valve engine according to claim 3, wherein
the concave portion (5c) is in the shape of a spherical surface.

5. The two-valve engine according to any one of claims 1 to 4, wherein
the piston part (5) has, in a top surface (5t) of the piston part (5), a convex portion (5p), and
the convex portion (5p) is arranged to overlap the second region (F) where the ignition device (7) is not arranged, when viewed in the direction of the central axis line (C) of the cylinder bore (42b).

6. The two-valve engine according to any one of claims 1 to 5, wherein
in the non-squish region (N), a spacing distance between the cylinder head part (41) and the piston part (5) with respect to the central axis line (C) direction of the cylinder bore (42b) continuously increases from outside to inside with respect to the radial direction of the cylinder bore (42b).

7. The two-valve engine according to any one of claims 1 to 6, wherein
the non-squish region (N) is a region where a raised portion for producing a squish effect is provided neither in the cylinder head part (41) nor in the piston part (5).

8. The two-valve engine according to any one of claims 1 to 7, wherein
the intake passage (41a) is arranged such that the straight line (Q) that is an extension of a center line (P) of the intake passage (41a) from the center (41c) of the intake port (41b) passes through the second region (F) where the ignition device (7) is not arranged and extends to the non-squish region (N) without overlapping the exhaust port (41f), when viewed in the direction of the central axis line (C).

9. The two-valve engine according to any one of claims 1 to 8, wherein
the non-squish region (N) of the combustion chamber (4r) is provided in a portion of the peripheral region of the combustion chamber (4r), the portion corresponding at least to the entire second region (F) where the ignition device (7) is not arranged.

## Patentansprüche

1. Ein Zweiventilmotor, der folgende Merkmale aufweist:
eine Kurbelwelle (2);
ein Kolbenteil (5), das mit der Kurbelwelle (2) gekoppelt ist;
ein Zylinderteil (4), das dazu ausgebildet ist, mit dem Kolbenteil (5) zusammenzuwirken, um eine Verbrennungskammer (4r) zu definieren, wobei das Zylinderteil (4) ein Zylinderkopfteil (41) und ein Zylinderkörperteil (42) umfasst, wobei das Zylinderkopfteil (41) einen Einlasskanal (41b) und einen Auslasskanal (41f) aufweist, wobei der eine Einlasskanal (41b) mit einem Einlassdurchgang (41a) in Verbindung steht und dazu ausgebildet ist, durch ein Einlassventil (8a) geöffnet und geschlossen zu werden, wobei der eine Auslasskanal (41f) mit einem Auslassdurchgang (41e) in Verbindung steht und dazu ausgebildet ist, durch ein Auslassventil (8b) geöffnet und geschlossen zu werden, wobei das Zylinderkörperteil (42) eine Zylinderbohrung (42b) aufweist, in der das Kolbenteil (5) untergebracht ist;
ein Kraftstoffeinspritzteil (6), das einen Kraftstoff in den Einlassdurchgang (41a) einspritzt; und
eine Zündvorrichtung (7),
wobei die Verbrennungskammer (4r) durch eine gerade Linie (D), die durch eine Mitte (41c) des Einlasskanals (41b) und eine Mitte (41g) des Auslasskanals (41f) verläuft, unterteilt ist in eine erste Region (E) und eine zweite Region (F), und zwar bei Betrachtung in der Richtung einer Mittelachsenlinie (C) der Zylinderbohrung (42b)
wobei die Zündvorrichtung (7) in der ersten Region (E) angeordnet ist und nicht auf der geraden Linie (D), die durch die Mitte (41c) des Einlasskanals (41b) und die Mitte (41g) des Auslasskanals (41f) verläuft, und
wobei die Verbrennungskammer (4r) eine Nicht-Quetsch-Region (N) aufweist, die in zumindest einem Teil einer Peripherieregion der Verbrennungskammer (4r) in Bezug auf die Radialrichtung der Zylinderbohrung (42b) vorgesehen ist, wobei die Nicht-Quetsch-Region (N) eine Region ist, in der von dem Zylinderkopfteil (41) und dem Kolbenteil (5) zumindest das Zylinderkopfteil (41) nicht mit einem hervorstehenden Abschnitt zum Erzeugen eines Quetscheffekts versehen ist und in der im Wesentlichen keine Stufe in einer Region vorgesehen ist, in der eine obere Innenoberfläche des Zylinderkopfteils (41) und eine Innenumfangsoberfläche des Zylinderkörperteils (42) benachbart zueinander und zusammenhängend miteinander sind,
**dadurch gekennzeichnet, dass**
der Einlassdurchgang (41a) derart angeordnet ist, dass die zweite Region (F), in der die Zündvorrichtung (7) nicht angeordnet ist, und die Nicht-Quetsch-Region (N) sich auf einer geraden Linie (Q) befinden, die eine Verlängerung einer Mittellinie (P) des Einlassdurchgangs (41a) von der Mitte (41c) des Einlasskanals (41b) ist, und zwar bei Betrachtung in der Richtung der Mittelachsenlinie (C) der Zylinderbohrung (42b), und
der Zweiventilmotor ein Wälzlager aufweist, das dazu ausgebildet ist, die Kurbelwelle (2) zu tragen.

2. Der Zweiventilmotor gemäß Anspruch 1, bei dem
der Einlassdurchgang (41a) angeordnet ist, um einen Krümmungsbogen auf einer vorgelagerten Seite des Einlasskanals (41b) zu bilden, und zwar bei Betrachtung in der Richtung der Mittelachsenlinie (C) der Zylinderbohrung (42b), und
die Zündvorrichtung (7) außerhalb des Krümmungsbogens angeordnet ist, und zwar bei Betrachtung in der Richtung der Mittelachsenlinie (C) der Zylinderbohrung (42b).

3. Der Zweiventilmotor gemäß Anspruch 1 oder 2, bei dem
das Kolbenteil (5) in einer oberen Oberfläche (5t) des Kolbenteils (5) einen Konkavabschnitt (5c) aufweist, der von einer Umgebung desselben zurückgesetzt ist, und
der Konkavabschnitt (5c) derart vorgesehen ist, dass der Bereich, über dem der Konkavabschnitt (5c) die erste Region (E), in der die Zündvorrichtung (7) angeordnet ist, überlappt, größer ist als der Bereich, über dem der Konkavabschnitt (5c) die zweite Region (F), in der die Zündvorrichtung (7) nicht angeordnet ist, überlappt, und zwar bei Betrachtung in der Richtung der Mittelachsenlinie (C) der Zylinderbohrung (42b).

4. Der Zweiventilmotor gemäß Anspruch 3, bei dem
der Konkavabschnitt (5c) in der Form einer Kugeloberfläche vorliegt.

5. Der Zweiventilmotor gemäß einem der Ansprüche 1 bis 4, bei dem
das Kolbenteil (5) in einer oberen Oberfläche (5t) des Kolbenteils (5) einen Konvexabschnitt (5p) aufweist und
der Konvexabschnitt (5p) derart angeordnet ist, dass derselbe die zweite Region (F), in der die Zündvorrichtung (7) nicht angeordnet ist, überlappt, und zwar bei Betrachtung in der Richtung der Mittelachsenlinie (C) der Zylinderbohrung (42b).

6. Der Zweiventilmotor gemäß einem der Ansprüche 1 bis 5, bei dem
in der Nicht-Quetsch-Region (N) eine Abstandslänge zwischen dem Zylinderkopfteil (41) und dem Kolbenteil (5) in Bezug auf die Richtung der Mittelachsenlinie (C) der Zylinderbohrung (42b) von außen nach innen in Bezug auf die Radialrichtung der Zylinderbohrung (42b) kontinuierlich steigt.

7. Der Zweiventilmotor gemäß einem der Ansprüche 1 bis 6, bei dem
die Nicht-Quetsch-Region (N) eine Region ist, in der ein hervorstehender Abschnitt zum Erzeugen eines Quetscheffekts weder in dem Zylinderkopfteil (41) noch in dem Kolbenteil (5) vorgesehen ist.

8. Der Zweiventilmotor gemäß einem der Ansprüche 1 bis 7, bei dem
der Einlassdurchgang (41a) derart angeordnet ist, dass die gerade Linie (Q), die eine Verlängerung einer Mittellinie (P) des Einlassdurchgangs (41a) von der Mitte (41c) des Einlasskanals (41b) ist, durch die zweite Region (F) verläuft, in der die Zündvorrichtung (7) nicht angeordnet ist, und sich in die Nicht-Quetsch-Region (N) erstreckt, ohne den Auslasskanal (41f) zu überlappen, und zwar bei Betrachtung in der Richtung der Mittelachsenlinie (C).

9. Der Zweiventilmotor gemäß einem der Ansprüche 1 bis 8, bei dem
die Nicht-Quetsch-Region (N) der Verbrennungskammer (4r) in einem Abschnitt der Peripherieregion der Verbrennungskammer (4r) vorgesehen ist, wobei der Abschnitt zumindest der gesamten zweiten Region (F) entspricht, in der die Zündvorrichtung (7) nicht angeordnet ist.

## Revendications

1. Moteur à deux soupapes, comprenant:
un vilebrequin (2);
une partie piston (5) couplée au vilebrequin (2);
une partie cylindre (4) configurée pour coopérer avec la partie piston (5) pour définir une chambre de combustion (4r), la partie cylindre (4) comprenant une partie culasse (41) et une partie corps de cylindre (42), la partie culasse (41) présentant un orifice d'admission (41b) et un orifice d'échappement (41f), l'un orifice d'admission (41b) communiquant avec un passage d'admission (41a) et étant configuré de manière à être ouvert et fermé par une soupape d'admission (8a), l'un orifice d'échappement (41f) communiquant avec un passage d'échappement (41e) et étant configuré de manière à être ouvert et fermé par une soupape d'échappement (8b), la partie corps de cylindre (42) présentant un alésage de cylindre (42b) dans lequel est logée la partie piston (5);
une partie injecteur de carburant (6) qui injecte un carburant dans le passage d'admission (41a); et
un dispositif d'allumage (7),
la chambre de combustion (4r) étant divisée en une première région (E) et une deuxième région (F) par une ligne droite (D) passant par un centre (41c) de l'orifice d'admission (41b) et un centre (41g) de l'orifice d'échappement (41f), lorsque vue dans la direction d'une ligne d'axe central (C) de l'alésage de cylindre (42b),
le dispositif d'allumage (7) étant disposé dans la première région (E) et pas sur la ligne droite (D) passant par le centre (41c) de l'orifice d'admission (41b) et le centre (41g) de l'orifice d'échappement (41f), et
la chambre de combustion (4r) présentant une région non molle (N) qui est prévue dans au moins une partie d'une région périphérique de la chambre de combustion (4r) par rapport à la direction radiale de l'alésage du cylindre (42b), la région non molle (N) étant une région dans laquelle, parmi la partie culasse (41) et la partie piston (5), au moins la partie culasse (41) n'est pas pourvue d'une partie surélevée destinée à produire un effet de mollesse, et où il n'est substantiellement pas prévu de marche dans une région dans laquelle une surface supérieure intérieure de la partie culasse (41) et une surface circonférentielle intérieure de la partie corps de cylindre (42) sont adjacentes et continues l'une à l'autre,
**caractérisé par le fait que**
le passage d'admission (41a) est disposé de sorte que la deuxième région (F) dans laquelle n'est pas disposé le dispositif d'allumage (7) et la région non molle (N) soient situées sur une ligne droite (Q) qui est un prolongement d'une ligne centrale (P) du passage d'admission (41a) à partir du centre (41c) de l'orifice d'admission (41b), lorsque vue dans la direction de la ligne d'axe central (C) de l'alésage de cylindre (42b), et
le moteur à deux soupapes comprend un roulement configuré pour supporter le vilebrequin (2).

2. Moteur à deux soupapes selon la revendication 1, dans lequel
le passage d'admission (41a) est disposé de manière à former un arc curviligne du côté amont de l'orifice d'admission (41b), lorsque vu dans la direction de la ligne d'axe central (C) de l'alésage de cylindre (42b), et
le dispositif d'allumage (7) est disposé en dehors de l'arc curviligne, lorsque vu dans la direction de la ligne d'axe central (C) de l'alésage de cylindre (42b).

3. Moteur à deux soupapes selon la revendication 1 ou 2, dans lequel
la partie piston (5) présente, dans une surface supérieure (5t) de la partie piston (5), une partie concave (5c) qui est en retrait par rapport à son environnement, et
la partie concave (5c) est prévue de sorte que la zone sur laquelle la partie concave (5c) vient en chevauchement avec la première région (E) dans laquelle est disposé le dispositif d'allumage (7) soit plus grande que la zone sur laquelle la partie concave (5c) vient en chevauchement avec la deuxième région (F) dans laquelle n'est pas disposé le dispositif d'allumage (7), vue dans la direction de la ligne d'axe central (C) de l'alésage de cylindre (42b).

4. Moteur à deux soupapes selon la revendication 3, dans lequel la partie concave (5c) présente la forme d'une surface sphérique.

5. Moteur à deux soupapes selon l'une quelconque des revendications 1 à 4, dans lequel
la partie piston (5) présente, dans une surface supérieure (5t) de la partie piston (5), une partie convexe (5p), et
la partie convexe (5p) est disposée de manière à venir en chevauchement avec la deuxième région (F) dans laquelle n'est pas disposé le dispositif d'allumage (7), vue dans la direction de la ligne d'axe central (C) de l'alésage de cylindre (42b).

6. Moteur à deux soupapes selon l'une quelconque des revendications 1 à 5, dans lequel
dans la zone non molle (N), la distance d'écartement entre la partie culasse (41) et la partie piston (5) par rapport à la ligne d'axe central (C) de l'alésage de cylindre (42b) augmente en continu de l'extérieur vers l'intérieur par rapport à la direction radiale de l'alésage de cylindre (42b).

7. Moteur à deux soupapes selon l'une quelconque des revendications 1 à 6, dans lequel
la région non molle (N) est une région dans laquelle une partie surélevée destinée à produire un effet de mollesse est prévue ni dans la partie culasse (41), ni dans la partie piston (5).

8. Moteur à deux soupapes selon l'une quelconque des revendications 1 à 7, dans lequel
le passage d'admission (41a) est disposé de sorte que la ligne droite (Q) qui est un prolongement d'une ligne centrale (P) du passage d'admission (41a) à partir du centre (41c) de l'orifice d'admission (41b) passe à travers la deuxième région (F) dans laquelle n'est pas disposé le dispositif d'allumage (7) et s'étende jusqu'à la région non molle (N) sans venir en chevauchement avec l'orifice d'échappement (41f), vue dans la direction de la ligne d'axe central (C).

9. Moteur à deux soupapes selon l'une quelconque des revendications 1 à 8, dans lequel
la région non molle (N) de la chambre de combustion (4r) est prévue dans une partie de la région périphérique de la chambre de combustion (4r), la partie correspondant au moins à la deuxième région entière (F) dans laquelle n'est pas disposé le dispositif d'allumage (7).
